(19) Europäisches Patentamt
European Patent Office
Office européen des brevets

(11) **EP 3 406 107 B1**

(12) **EUROPEAN PATENT SPECIFICATION**

(45) Date of publication and mention
of the grant of the patent:
**08.04.2020 Bulletin 2020/15**

(51) Int Cl.:
***H04W 84/18*** *(2009.01)*   ***H04W 74/00*** *(2009.01)*

(21) Application number: **16704250.6**

(86) International application number:
**PCT/EP2016/053140**

(22) Date of filing: **15.02.2016**

(87) International publication number:
**WO 2017/140337 (24.08.2017 Gazette 2017/34)**

(54) **DEVICE TO DEVICE FULL DUPLEX COMMUNICATION**

VORRICHTUNG-ZU-VORRICHTUNG-VOLLDUPLEX-KOMMUNIKATION

COMMUNICATION EN DUPLEX INTÉGRAL DE DISPOSITIF À DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.11.2018 Bulletin 2018/48**

(73) Proprietor: **Huawei Technologies Co., Ltd.
Longgang District
Shenzhen, Guangdong 518129 (CN)**

(72) Inventors:
• **CAO, Hanwen
80992 Munich (DE)**

• **HU, Liang
80992 Munich (DE)**
• **GANGAKHEDKAR, Sandip
80992 Munich (DE)**
• **EICHINGER, Josef
80992 Munich (DE)**

(74) Representative: **Kreuz, Georg Maria
Huawei Technologies Duesseldorf GmbH
Riesstraße 25
80992 München (DE)**

(56) References cited:
**WO-A1-2015/017483      GB-A- 2 511 931
US-A1- 2015 327 315**

**Description**

BACKGROUND

The present invention, in some embodiments thereof, relates to a node in a wireless ad hoc network with full duplex multi-channel communication and, more specifically, but not exclusively, to channel allocation for the network node.

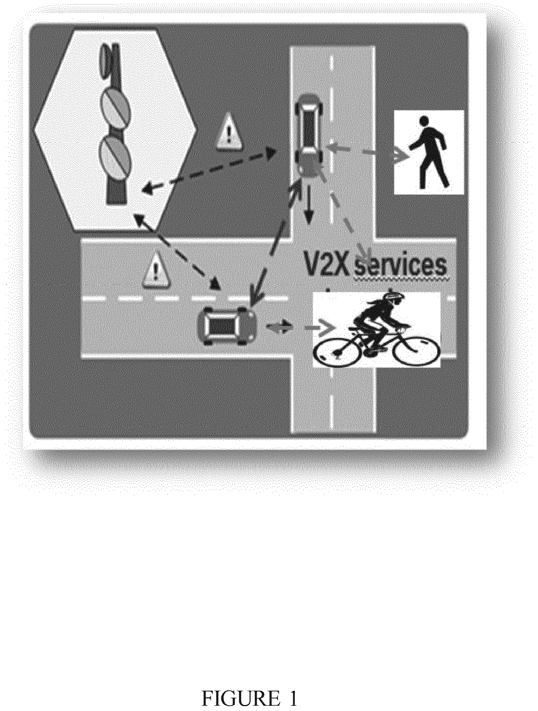

Fifth generation (5G) wireless communication is envisioned to provide low-latency, high reliability and high throughput to fulfill diverse challenging use cases such as autonomous driving and industrial automation. Fig. 1 illustrates an exemplary 5G system which connects vehicles, user devices and traffic signals.

Among 5G-enabling technology components, device-to-device (D2D) communication and its combination with in-band full duplex radio are of great interest. In-band full duplex D2D communication provides low-latency, high throughput and high reliability communications which are expected to fulfill the requirements of autonomous driving.

D2D communication has been proposed as a key enabler for direct vehicle-to-vehicle (V2V) communications. By exploring the proximity gain and hop gain of D2D communications, high throughput and low-latency may be achieved in V2V communications. However, the half-duplex constraint of the legacy device limits the performance of D2D communications where each device cannot receive and transmit at the same time due to the self-interference. The half-duplex constraint may lead to the long latency in the channel access, low utilization of time-frequency resource blocks and high packet collisions.

Recent advancements in full-duplex technology supplement D2D communications with in-band duplex capability. With recent advances in analog and digital cancellation techniques, self-interference suppression of up to 110dB may be achieved. This means that the residue of the self-interference signal goes below the noise floor of typical wireless radios (e.g. Wi-Fi, LTE), enabling the receiver to handle very weak received signals. At the physical layer, assuming point-to-to-point link and perfect self-interference cancellation (SIC), full-duplex transmissions potentially offer up to twice the spectral efficiency of half-duplex transmissions.

Another area of interest is ad hoc D2D communications. In a typical ad hoc D2D communication network:

    i) Any node may send information to any other node almost instantly without the delay of hand shake; and
    ii) Any node may receive information from other nodes simultaneously while it is sending information other nodes.

Existing legacy medium access control (MAC) protocols with conventional wireless transceivers only work for half-duplex radio, which is not able to exploit the full-duplex benefits. Examples include:

    i) TDMA (time division multiple access)/CSMA (Carrier Sensing Multiple Access): Devices cannot in-band transmit and receive simultaneously. Network nodes need to wait in turn or repeatedly content time opportunities, which may lead to high and uncertain delay.
    ii) Frequency division multiple access (FDMA): Problematic for ad hoc networks with conventional half-duplex transceiver, as one transmitting device is not able to decode signals from all other devices in other frequency channels. Multiple pairs of devices can communicate simultaneously using orthogonal frequency channels. However, a node cannot simultaneously transmit and receive in different frequency channels of the same band, since such an FDD operation requires a large full-duplex gap (typically > tens of MHz) as well as an RF diplexer with fixed and non-configurable passing and rejecting bands. As a result, for ad hoc communication with FDMA different nodes require the time-domain coordination of transmission and reception for a TDD operation, which leads to high delay and signal collision.
    iii) Code division multiple access (CDMA): Very difficult to spread code assignment and power control.
    iv) Spatial division multiple access (SDMA): Requires active antenna array on each node and larger amounts of channel information, rendering it complex and costly.

The existing full-duplex MAC protocols are enabled by three key mechanisms: shared random backoff, header snooping, and collision avoidance with RTS/CTS exchange:

    i) In the shared random backoff based protocol, two nodes that have completed the handshake for full-duplex communication mode defer their transmissions for a common duration shared by the two nodes, with the intention of allowing other (pairs) of nodes to use the channel. Shared random backoff-based protocols are implicitly synchronous due to the common back-off and allow the fairness of full-duplex nodes to utilize the channel.
    ii) In header snooping-based MAC protocols, the primary transmitted packet header is decoded by other nodes in the network, excluding the primary receiver. Due to the header snooping, the full-duplex nodes transmit with different time stamps, which results in asynchronous transmissions.

iii) The RTS/CTS mechanism that is used in half-duplex transmissions may also be utilized in full-duplex transmissions to mitigate the hidden-node problem.

Table 1 summarizes the application, benefits and drawbacks of various approaches.

In order to execute the above three mechanisms, unique fields are introduced to exchange the basic information among the full-duplex nodes. These fields are:

i) In the "full-duplex transmission mode" field - At a given time, the set of nodes selected to initiate full-duplex transmissions may operate in either in half-duplex, bi-directional full-duplex mode or three-nodes full duplex modes.

ii) In the "full-duplex duration mode field" the duration of full-duplex communication is indicated. In this case, the nodes participating in full-duplex communications may be synchronized and collisions may be minimized.

Table 1

| MAC protocol | Mechanism | Application | Benefits | Drawbacks |
|---|---|---|---|---|
| Shared-random back-off | Shared-random back-off | Cellular, D2D | Both the nodes fully utilize the data transmission duration | Independent backoff counter |
| Distributed MAC 1 | Header Snooping | Cellular, D2D, relay network | Low overhead in handshaking, select nodes for three-node full duplex based on the signal-to-interference ratio (SIR) | Busy tone signaling required, duration of the header snooping period cannot be used for data transmissions. |
| Distributed MAC 2 | Header Snooping | Cellular, D2D, relay network | Low signaling overhead | No handshake before transmitting packets |
| RCTS MAC | Signature-based RTS/CTS | Cellular, D2D network | Low overhead signaling, indentify nearby transmissions to maximize system throughput | Vulnerable to collisions |
| RFD-MAC | Header Snooping | Relay network | Asynchronous approach with low signaling overhead | High collision period on contention |
| Multi-channel | Multi-channel RTS/CTS | D2D, Relay network | Full-duplex RTS/CTS to solve hidden and exposed node problem | Long -latency in RTS/CTS handshake |

Additional background includes:

[1] A. Sahai, G. Patel, and A. Sabharwal, "Pushing the Limits of Full Duplex: Design and Real-Time Implementation," Rice University Technical Report TREE 1104, 2011.
[2] S. Goval et al., "A Distributed MAC Protocol for Full Duplex Radio," Proc. ASILOMAR, 2013.
[3] M. Jain et al., "Practical, Real-Time, Full Duplex Wireless," Proc. ACM MobiCom, 2011.
[4] W. Zhou, K. Srinivasan, and P. Sinha, "RCTC: Rapid Concurrent Transmission Coordination in Full Duplex Wireless Networks," IEEE Int'1. Conf. Network Protocols, 2013.
[5] K. Tamaki et al., "Full Duplex Media Access Control for wireless Multi-Hop Networks," Proc. IEEE VTC Spring, 2013.
[6] Y. Zhang et al., "FD-MMAC: Combating Multi-Channel Hidden and Exposed Terminals Using a Single Transceiver," Proc. IEEE INFOCOM, 2014.

US2015/327315 provides a resource allocation scheme and a corresponding signaling scheme based on the characteristics of D2D communication.

SUMMARY

Embodiments of the invention use a distributed wireless multi-user access scheme for full duplex ad hoc wireless communication using multiple frequency channels. While a node is receiving data in some of the frequency channels it simultaneously broadcasts out to other nodes, in one or more selected channels, a respective Channel Allocation Information Set (CAIS). Each CAIS includes a node identifier and frequency channel usage data for the respective node which transmitted the CAIS. Network nodes receive and analyze CAIS messages received from other nodes in the network, and, based on this analysis, allocate frequency channels for transmission to other network nodes. Optionally, the frequency channel usage information is indicated by:

i) the indices of the channels in which data is being currently received; and

ii) the indices of the channels in which data is unable to be received (e.g. due to high self-interference or the interference from other nodes).

According to an aspect of some embodiments of the present invention there is provided a network node for communicating over a wireless ad hoc network (WANET). The WANET includes multiple network nodes communicating on multiple frequency channels. The node includes a processor which executes code instructions. The code instructions instruct the processor to extract at least one channel allocation information set (CAIS) from signals received from at least one other network nodes. The CAIS includes a node identifier and frequency channel usage data for a respective node. Extracted CAISs are analyzed to identify at least one channel, of the multiple frequency channels, receivable by a target node. At least one of the identified channels is allocated for transmission to the target node, and a signal is prepared for transmission to the target node over the allocated channel(s).

According to some embodiments of the invention, the node further includes a transmitter-receiver adapted to transmit and receive signals in the multiple frequency channels in full duplex mode.

According to some embodiments of the invention, the signal prepared for transmission to the target node further includes a data payload.

According to some embodiments of the invention, the processor executes further code to select a random time period for holding transmitting the signal to the target node so as to avoid collision with another node simultaneously initiating transmission on an allocated channel.

According to some embodiments of the invention, the processor executes further code to dynamically update the CAIS of the network node according to current frequency channel usage by the network node and current received channel allocation information sets (CAISs) from other WANET nodes.

According to some embodiments of the invention, the CAIS further includes communication control information.

According to some embodiments of the invention, the CAIS is transmitted asynchronously from at least one of data transmitted in other frequency channels and CAISs transmitted in other frequency channels.

According to some embodiments of the invention, CAIS transmission and data reception and/or data transmission are performed concurrently over at least one allocated channel.

According to an aspect of some embodiments of the present invention there is provided a method for communication in a wireless ad hoc network (WANET). The WANET includes multiple network nodes. The method is performed at a network node with full-duplex communication over multiple frequency channels, and includes:

transmitting, over at least one of the channels, a dynamically-updated channel allocation information set (CAIS) which includes the node's node identifier and frequency channel usage data for the node, the frequency channel usage data specifying channels over which the network node is currently receiving and channels currently unreceivable by the network node;

extracting at least one CAIS from signals received from at least one node of the WANET, each CAIS including a node identifier and frequency channel usage data for a respective node;

analyzing at least one extracted CAIS to identify at least one channel, of the multiple frequency channels, receivable by a first target node; and

transmitting to the first target node over at least one of the channels receivable by the first target node.

According to some embodiments of the invention, the analyzing is performed continuously on signals received concurrently with the transmitting.

According to some embodiments of the invention, identifying at least one channel receivable by a target node includes:

determining from the at least received CAIS, channels currently unused for data reception by the WANET nodes; and

determining from a respective CAIS of the first target node, at least one channel currently available for reception by the first target node; and

determining available channels for transmission to the first target node from the intersection of the channels currently unused for data reception by the other WANET nodes and the at least one channel currently available for reception by the target node.

According to some embodiments of the invention, the method further includes transmitting to a second target node over a channel currently unused for data reception by the WANET nodes and unreceivable by the first target node.

According to some embodiments of the invention, the transmitting and receiving are performed by a single transmitter-receiver at the network node.

According to some embodiments of the invention, the method further includes the inclusion of communication control information in the transmitted CAIS.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

Fig. 1 illustrates a 5G system with D2D communications;
FIG. 2 illustrates full duplex multi-channel multi-node to multi-node communication;
FIG. 3A is a simplified block diagram of a network node according to embodiments of the invention;
Fig. 3B is a simplified flowchart of instructions executed at a network node, according to embodiments of the invention;
Fig. 4A is a simplified block diagram of an allocation manager according to embodiments of the invention;
Figs. 4B-4C are simplified block diagrams of network nodes according to respective embodiments of the invention;
Fig. 5 presents an example of a multi-channel full-duplex node's transmitting and receiving behaviour;
Fig. 6 is a signaling chart illustrating the random holding and CAIS update procedure;
Fig. 7 shows an example of dynamic piggybacking of control information on a CAIS;
Fig. 8 is a simplified block diagram illustrating dynamic updating of the CAIS, according to an exemplary embodiment of the invention; and
Figs. 9A and 9B present simulation results for exemplary embodiments of the invention.

DETAILED DESCRIPTION

The present invention, in some embodiments thereof, relates to a node in a wireless ad hoc network with full duplex multi-channel communication and, more specifically, but not exclusively, to channel allocation for the network node.

The next generation of wireless communication (5G) is targeting a world of connected machines and human beings. In many important fields (such as Vehicle-to-Everything and industrial automation) low latency and high reliability are required at levels currently not achievable with mobile-broadband (MBB) oriented wireless technologies. In the future, D2D communication, with or without control from the base station, is expected to become more and more desired, especially for massive numbers of machine-type nodes. In fact, starting from Release 12 the D2D mode was introduced into the Long-Term Evolution (LTE) standard.

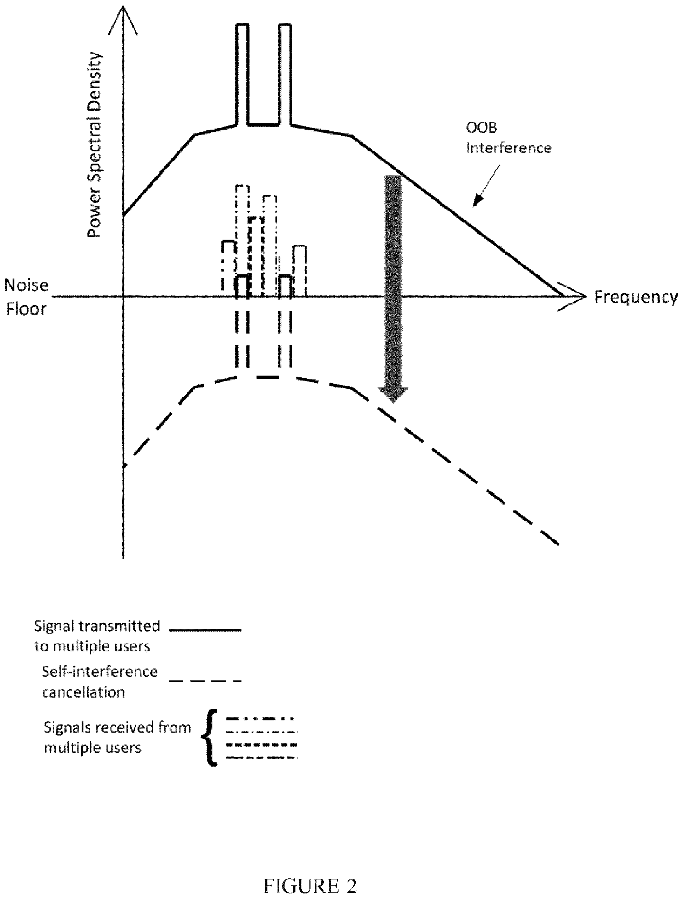

Full duplex radio technology allows for simultaneous signal transmission and reception, and, together with channel slicing in frequency domain, enables low-latency and concurrent multi-node to multi-node communications as illustrated in Fig. 2. However with conventional transceivers there are fundamental limitations in duplex and multiple access communication for multiple nodes in ad hoc networks.

Embodiments of the invention provide a distributed protocol for in-band full-duplex communications based on information exchanged between network nodes. This information, denoted here a channel allocation information set (CAIS), enables simultaneous use of multiple frequency channels. Network nodes transmit their own CAIS, receive and analyze CAIS from other nodes and perform channel allocation based on the analysis. Since the nodes operate in full-duplex, both transmission and reception may be performed concurrently.

The CAIS includes a node identifier and frequency channel usage data for the node. Optionally, the frequency channel usage data is indicated in the CAIS as the indices of the channels in which the respective node data is currently receiving data and the indices of the channels in which the node is unable to receive data (e.g. due to high self-interference and/or the interference from other nodes).

As explained in more detail below, the CAIS enables network nodes to allocate channels for transmissions to other network nodes in a manner which obtains low latency without long and unpredictable delay of resource contention and allocation. Time-consuming traffic passing through base stations may be reduced with D2D and ad hoc networking. High reliability may be obtained by reducing multiple user interfaces, avoiding packet collisions and reducing transmissions.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

I) Network node

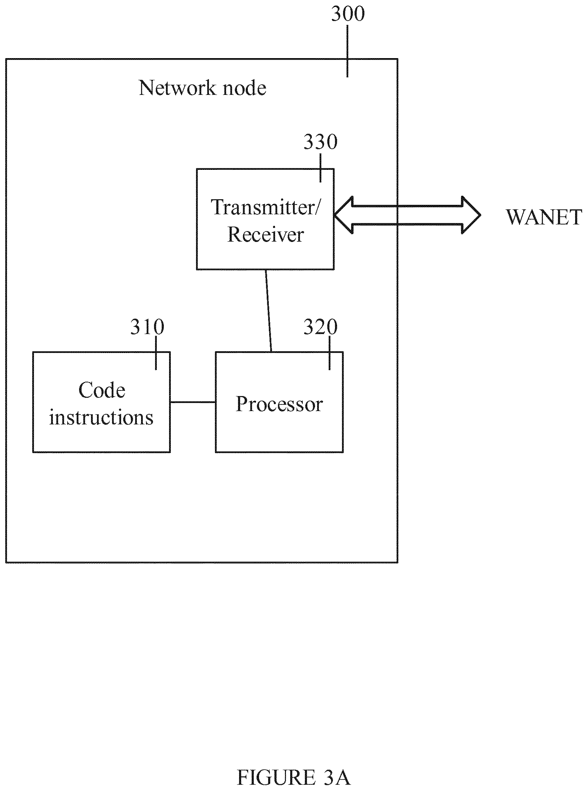

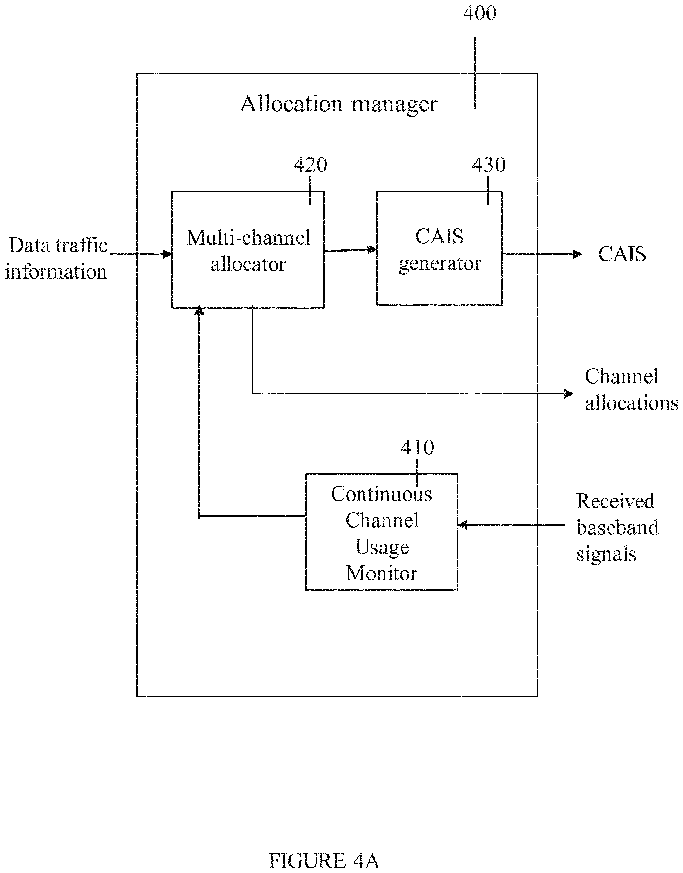

Reference is now made to Fig. 3A, which is a simplified block diagram of a network node according to embodiments of the invention. Node 300 communicates with other network nodes over a wireless ad hoc network (WANET) on multiple frequency channels. Network node operations are described in more detail in the context of Figs. 4A-4C.

Network node 300 includes a non-transient memory storing code instructions 310 and processor 320 which executes the code instructions in order to perform signal processing operations. The code instruction optionally provide for other functionality, as described herein. Optionally, node 300 further includes transmitter/receiver 330 for transmitting and receiving full duplex wireless signals in the multiple frequency channels, as described in more detail below.

The term transmitter/receiver (also denoted a transceiver) means a device, apparatus or system which transmits and receives wireless signals, and encompasses embodiments in which the transmitter and receiver portions share hardware and embodiments in which the transmitter and receiver have separate hardware but operate cooperatively over the same frequency band.

For clarity, some embodiments herein describe communication between two nodes. As a person of skill in the art will appreciate, embodiments of the invention are not limited to a specific number of nodes and may be implemented in networks with a larger number of nodes.

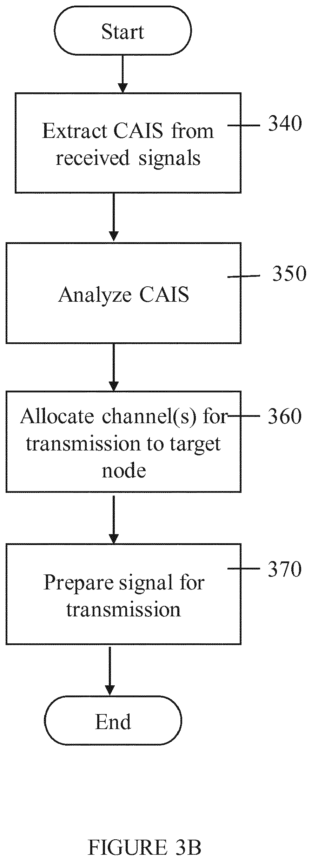

Reference is now made to Fig. 3B, which is a simplified flowchart of instructions executed at the network node, according to embodiments of the invention. The flowchart is shown for purposes of explanation and does not limit the invention to an ordered sequence of operations. As a person of skill in the art will appreciate, operations such as extracting and analyzing CAISs, updating channel allocations (and others) may be performed simultaneously and dynamically during node operation.

Channel allocation information sets (CAISs) are extracted from signals received from other WANET nodes (340). Each CAIS includes a node identifier, which identifies the node which sent the CAIS to the other nodes, and frequency channel usage data for the respective node. The frequency channel usage data indicates channels over which the node which transmitted the CAIS is currently receiving and channels currently unreceivable by the node (i.e. channels in which the node is unable to receive data, optionally determined using a specified reliability measure).

Optionally, the network node allocates one or more channels for transmitting its CAIS to multiple network nodes, not necessarily to a specific target node or nodes. Similarly, the network node optionally extracts CAISs from signals received from other nodes, even when the signals are not directed by the transmitting node to the receiving node (e.g. do not carry a data payload directed to the receiving node).

In order to transmit a signal to a target node, the node analyzes the CAISs to identify one or more frequency channels which the target node is able to receive (350). Optionally, the extraction and analysis are performed continuously, as signals are received from other nodes.

The term "target node" means a network node towards which the wireless signal is being transmitted. The target node may be an intermediate node which forwards data carried by the transmitted signal to another network node (or other destination) or, alternately or additionally, may itself be the final destination of the data.

At least one of the identified channels is allocated for transmission to the target node (360). Optionally, when the node is transmitting to more than one target node, channels may be allocated simultaneously for transmissions to multiple target nodes.

In some embodiments, the allocation is performed by first determining from the CAISs which channels are currently unused for data reception. Since each CAIS indicates which channels are currently being received on by the respective node, a set may be compiled which includes all of the channels which are currently being used for reception. Only the remaining channels are considered unused and therefore available for allocation for transmission to the target node. One or more of the available channels are allocated for transmission to the target node. It is noted channel allocation may be performed simultaneously for transmitting signals to multiple target nodes, based on respective sets of available channels for each of the target nodes.

Optionally, the allocation is based on additional factors such as network policies, load balancing, communication protocols and so forth.

Optionally, in channels with adequate SIC, the node may allocate a channel for transmission even when it is currently receiving on the same channel. In such cases, CAIS transmission, data reception and/or data transmission are performed concurrently over the same channel.

A signal is prepared for transmission to the target node over one or more allocated channels. The signal includes one or more of:

i) The node's CAIS;
ii) A data payload; and
iii) Control information, such as ACK/NACK, channel state information, etc.

The term "preparing a signal for transmission" and corresponding terms means any operation, or combination of operations, which results in data being modulated onto a carrier signal. These operations may be carried out at the digital and/or analog baseband and/or higher frequency stages of signal processing. These operations may include but are not limited to: selecting coding and modulation parameters, selecting timing parameters, preprocessing the baseband signal, encoding, encryption, channel mapping, digital to analog conversion, modulation and filtering.

Optionally, the node transmits different types of signals over different channels (and/or time slots). For example, in one channel the node may transmit a signal carrying the CAIS only, in another channel a signal carrying data only, and in a third channel a signal with CAIS, data and control information.

Optionally, the node transmits the signal carrying the CAIS asynchronously from data and/or CAIS transmitted in other frequency channels. Alternately, the CAIS is transmitted synchronously with the data and/or other CAIS.

Optionally, the node's CAIS of the network node is dynamically updated so that other WANET nodes which receive the CAIS have current information about the node's status. Data used by the nodes to update its CAIS includes current frequency channel usage by the network node (reception and/or transmission) and information from CAISs received from other WANET nodes.

Optionally, the signal is delayed by a random time period before being transmitted to the target node in order to avoid collision with another node simultaneously initiating transmission on an allocated channel (as described in more detail below).

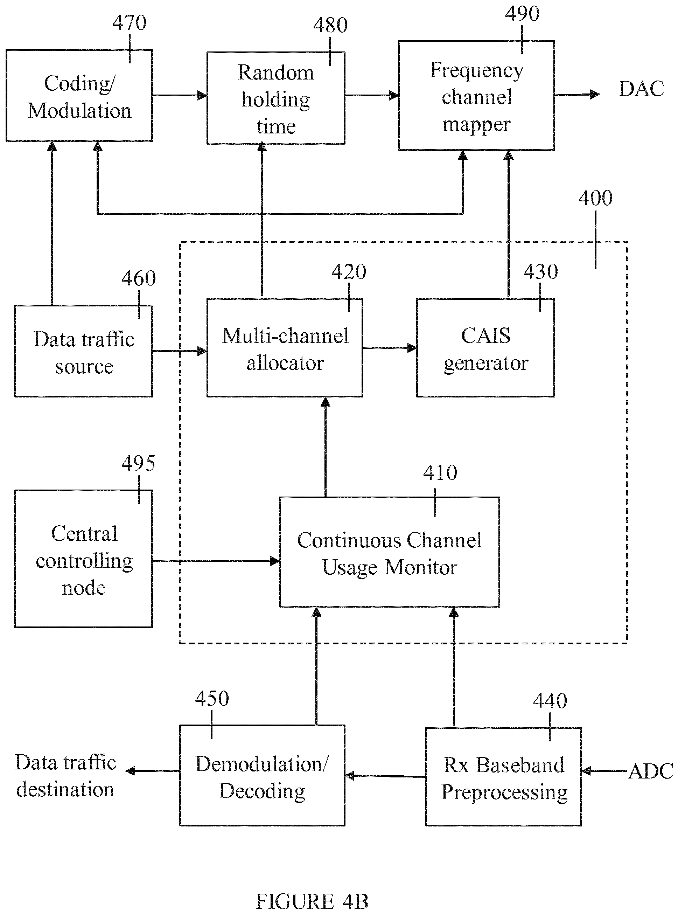

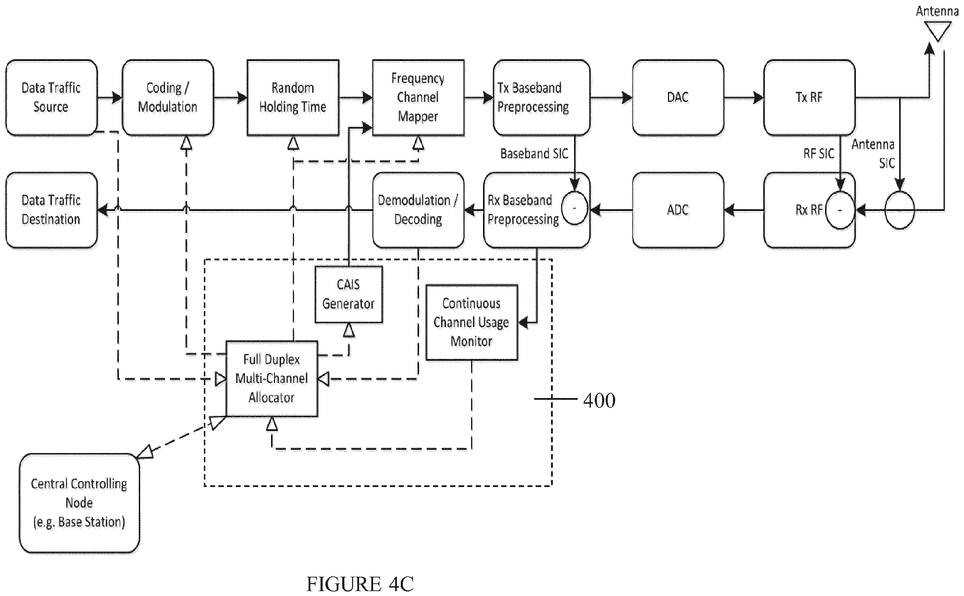

Fig. 4A illustrates a basic configuration, which includes continuous channel usage monitor 410, multi-channel allocator 420 and CAIS generator 430 (denoted collectively herein the allocation manager). Figs. 4B and 4C include additional blocks, for embodiments which include additional signal preparation and/or processing functionality.

Reference is now made to Fig. 4A, which is a simplified block diagram of an allocation manager according to embodiments of the invention. Allocation manager 400 includes continuous channel usage monitor 410, multi-channel allocator 420 and CAIS generator 430.

II) Continuous channel usage monitor

Continuous channel usage monitor 410 extracts the CAIS from received signals. Continuous channel usage monitor 410 monitors the wireless environment by decoding CAIS frames transmitted in one or more of the frequency channels, optionally using raw signal samples provided by the receive (Rx) baseband preprocessing (see Fig. 4B), and provides this information to multi-channel allocator 420.

III) Multi-channel allocator

Multi-channel allocator 420 analyzes the CAIS and allocates channels for transmission and receptions. Based on the information gathered by continuous channel usage monitor 410, multi-channel allocator 420 module allocates the usage of the frequency channels and decides how different signals are to be transmitted.

Optionally, multi-channel allocator 420 provides control information for at least one of the following operations:

i) Frequency channel mapping;
ii) CAIS generation;

iii) Coding and modulation;
iv) Selecting a random holding time.

Optionally, multi-channel allocator 420 uses additional data obtained from at least one of the following sources (for reference see Fig. 4C):

i) Data traffic source;
ii) Demodulation/decoding operations or module; and
iii) Central controlling node (e.g. base station).

IV) CAIS generator

CAIS generator 430 generates the node's CAIS signal according to the configuration selected by multi-channel allocator 420. The CAIS signal is transmitted in one or more allocated frequency channels to protect the ongoing data reception. The CAIS signal includes frequency channel usage data, optionally specified by the indices of the current data-receiving frequency channels (i.e. the receiving channel set) and the indices of the current un-receivable channels (i.e. the un-receivable channel set). The CAIS additionally includes a node identifier indicating of the identity of node that sends it. Optionally, the CAIS further includes a preamble/pilot structure to assist the decoding of the CAIS by other nodes.

In order to perform the most effective allocation of channels by the nodes, it is desirable that the CAIS reflect as closely as possible each node's respective frequency channel usage. Optionally, CAIS generator 430 dynamically updates the frequency channel usage data. Thus, the node transmits an up to date CAIS which takes into account the full duplex capability of the apparatus.

Optionally, CAIS generator 430 updates the frequency channel usage data on at least one of:

a) Continuously;
b) Periodically; and
c) Upon receiving a trigger from another network element (such as a base station).

Optionally, the frequency channels in the CAIS are indexed explicitly using numbers or using a fixed number of bit flags denoting the channel's status. For example, two bits for each channel are sufficient to denote three different statuses: Data-Receiving, Un-receivable and Available.

Reference is now made to Fig. 4B, which is a simplified block diagram of a network node according to embodiments of the invention. The node includes allocation manager 400 and at least one of:

a) Rx Baseband Preprocessing module 440: Inputs received signals after ADC, samples the signals and provides the samples to continuous channel usage monitor 410.
b) Demodulation/decoding module 450: Demodulates and decodes the received signal for delivery to the destination and provides information about incoming data traffic to continuous channel usage monitor 410.
c) Data traffic source 460: Is the source of outbound data traffic and optionally provides information about outgoing data traffic to continuous channel usage monitor 410.
d) Coding/modulation module 470: Performs coding and modulation of the data signal, optionally according to parameters provided by multi-channel allocator 420.
e) Random holding time module 480: Holds the signal by a random holding time selected by multi-channel allocator 420.
f) Frequency channel mapper 490: Maps the signal to transmission channels according to channel allocations provided by multi-channel allocator 420.
g) Central controlling node 495: A network node, such as a base station, which provides additional information (e.g. network status) to continuous channel usage monitor 410.

Other optional network node components (shown in Fig. 4C) include but are not limited to:

a) Radio frequency transmitter (Tx RF)/Radio frequency receiver (Rx RF) - transmits and receives full duplex multi-channel to/from other network nodes, according to specified channel allocation and other transmission/reception parameters; and
b) Analog to digital (ADC) - converts analog signals (at a given frequency band, for example RF, IF or baseband) to digital signals and provides the digitized signals to continuous channel usage monitor 410 and to other system elements for demodulation, decoding and other processing; and

c) Digital to analog converter (DAC) - converts digital signals to analog signals prior to analog processing for transmission.

Fig. 4C is a simplified block diagram of a network node according to an exemplary embodiment of the invention. The network node is based on the state-of-the-art design of a full-duplex radio transceiver with full duplex multi-frequency channel wireless communication. SIC techniques are implemented at multiple levels: Antenna SIC, RF SIC (analog) and baseband SIC (digital). Full-duplex signal transmission and reception in multiple frequency channels is performed using a single transmitter/receiver (e.g. transceiver) supporting SIC, and not multiple independent transmitters and receivers each tuned to a single frequency channel (which is inflexible, costly and power consuming). Digital-to-Analog Converter (DAC) and Analog-to-Digital Converter (ADC) modules cover the entire frequency band with all the channels, and the signal mapping to different channels may be performed solely in baseband with signal processing such as sub-carrier allocation, multi-channel filtering, etc.

In an exemplary embodiment, inputs and outputs to/from multi-channel allocator 420 include:

1) Continuous channel usage monitor 410 provides continuous updates of the wireless spectrum environment, based at least on observation of CAISs transmitted by other nodes.

2) Demodulation/decoding module 450 provides information about ongoing data reception, so that multi-channel allocator 420 may decide the content encoded/modulated into the CAIS.

3) When data reception begins, multi-channel allocator 420 chooses one or more frequency channel to broadcast the node's CAIS in order to provide immediate protection to the ongoing data reception. Frequency channel mapper 490 accordingly maps the channels for the CAIS to be sent. The frequency channels for sending the CAIS may include receiving channels and/or non-receiving channels, depending on the SIC capability of the full-duplex transceiver in the node.

4) Multi-channel allocator 420 controls the random holding time and/or the frequency channel mapping pattern for sending data signals based on the multi-user access method.

5) Data traffic source 460 provides multi-channel allocator 420 with information on data bit packaging, so that multi-channel allocator 420 may decide the coding and modulation parameters for fitting into the frequency channel mapping pattern of data transmission.

6) Multi-channel allocator 420 accepts scheduling commands from central controlling code 495 (e.g. the downlink from a base station) and allocates channels accordingly, typically while conforming to predefined strategies. multi-channel allocator 420 may also report its channel allocation information as well as continuous channel usage monitor 410 observations to central controlling code 495 (e.g. the uplink to a base station) for assisting decision-making at central controlling code 495.

## V) Multi-Frequency Channel Full Duplex Wireless Distributed Multi-User Access

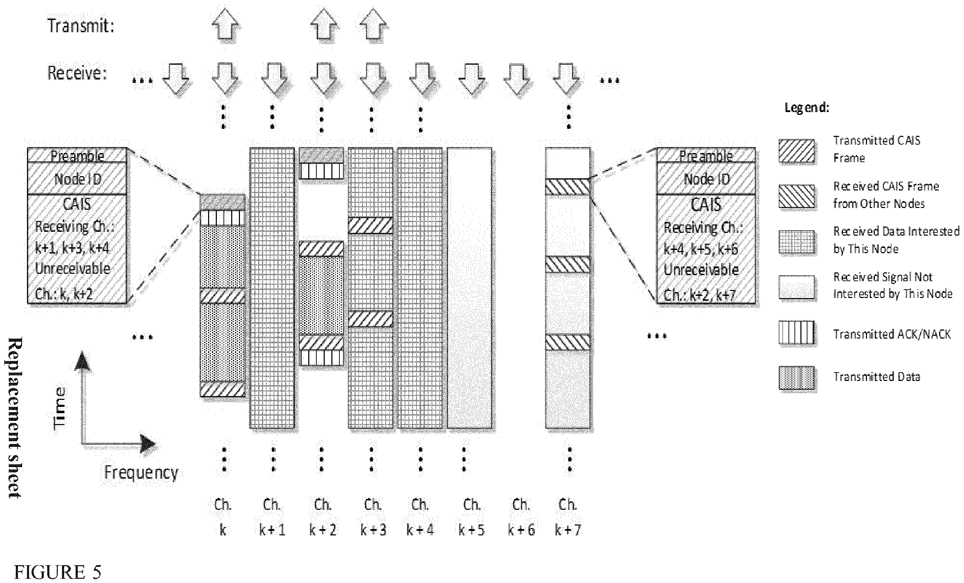

Reference is now made to Fig. 5, which presents an example of the transmitting and receiving behaviour of a multi-channel full-duplex node from the node's own perspective. The node is currently receiving data from other nodes in three frequency channels, with indices k+1, k+3 and k+4. Additionally, the node continuously receives signals over the whole frequency band and monitors changes in the wireless spectrum environment. Since the node is full-duplex, the full-band reception and monitoring is continuous even when the node is transmitting data, CAIS or feedback signals (for example: ACK/NACK).

In Fig. 5, the node is transmitting a CAIS which includes: a preamble, node ID and frequency channel information (which shows that the node is receiving on channels k+1, k+3 and k+4 and unable to receive channels k and k+2). The node has also received a CAIS from another node. The received CAIS includes a preamble, the other node's ID and frequency channel information (which shows that the other node is receiving on channels k+4, k+5 and k+6 and unable to receive channels k+2 and k+7).

Following are examples of channel selection and protection mechanisms, according to embodiments of the invention.

## VI) Protection of Data-Receiving Channels

In order to protect ongoing data reception in some of the channels, the CAIS signal containing the frequency channel usage data (e.g. indices of data-receiving channels k+1, k+3 and k+4) is broadcast to all other nodes. Nodes which can decode the CAIS avoid transmitting in these channels in order to protect ongoing data reception of their neighbouring nodes. For example, the node may decode the CAIS received in channel k+7 and determine that channels k+4, k+5 and k+6 are being used for reception by another node. Consequently, the node avoids transmission of data, ACK/NACK and CAIS in channels k+4, k+5 and k+6.

Due to the reciprocity of wireless channels within the same band, other nodes which cannot decode the CAIS due to large wireless fading are safe to send signals without harmfully interfering with the CAIS sender's data reception. When the minimum decodable Signal to Interference and Noise Ratio (SINR) level for the CAIS signal is lower than the minimum decodable SINR level for a normal data signal, the receiving nodes have a sufficient protection margin against interfering transmissions from other nodes.

VII) Protection of Un-receivable Channels Considering Limited Full-Duplex Transceiver Design

The frequency channel usage data includes the indices (or other indicators) of channels unreceivable by the node which sent the CAIS. This facilitates using low-complexity and low-cost full-duplex transceivers in which the transmitted signal in one frequency channel cannot be sufficiently cancelled due to limited SIC capability of the transceiver. However, the out-of-channel power leakages are typically easier to sufficiently cancel out, since the power level of the out-of-channel leakages is typically several tens of decibels (dB) lower than that of the transmitted signal.

Channels may be unable to receive signals due to:

a) Strong interference from other nodes may interfere with reception at the node. The node may measure received signal strengths and determine that some channels are suffering from strong interference from other nodes, so that data cannot be reliably received and decoded in these channels.

b) Self interference - When the node has limited SIC capability and is transmitting in some channels, signal transmission in these channels may lead to strong self-interference so that data cannot be reliably received and decoded in these channels.

By including information about unreceivable channels in the CAIS, a node may avoid transmitting to a target node on an unreceivable channel, but may still use these channels to transmit to different target nodes.

VIII) Selection of Channels for Sending the CAIS

Considering the frequency-selective fading nature of the wireless channel and the varying interference levels in different channels, the node optionally transmits its CAIS redundantly in multiple frequency channels to strengthen the reliability of CAIS detection and decoding by other nodes. Optionally, the multi-channel allocator selects frequency channels for sending CAIS based on one or both of the following conditions:

1) The CAIS is not sent in the data-receiving channels of other CAIS-detectable nodes.

2) When the node's SIC capability is strong enough to cancel the self-interference from CAIS transmission to an acceptable level, the multi-channel allocator allocates the CAIS transmission to a data-receiving channel of the node itself. Otherwise, the multi-channel allocator chooses other channels for sending the CAIS.

IX) CAIS Based Anti-Collision Access Method

To illustrate an embodiment of channel allocation using the algebra of sets, the following notations are defined:

- The set of all the nodes at time moment t: $N(t)$
- The set of Node k's CAIS-detectable neighbors at time moment t: $N_k(t)$
- The set of Node k's Data-Receiving Channels at time moment t: $R_k(t)$
- The set of Node k's Un-receivable Channels at time moment t: $U_k(t)$

At time t, the available frequency channel set for Node m to send data to Node n excludes all the data receiving channels of node m's CAIS-detectable neighbors and excludes node n's un-receivable channels:

$$A_{m,n}(t) = \left[ \bigcup_{k \in N_m(t)} R_k(t) \right]^C \cap [U_n(t)]^C,$$

in which $[.]^C$ denotes the complementation of a set. The sending node m updates its available channels for transmission to node m by continuously monitoring the CAIS from other nodes in real-time.

X) Random Hold Time

A signal collision may arise when multiple nodes decide at the same moment to use the same channel for transmitting data. To mitigate this problem, in some embodiments when a node has data to send it is held for a random period of time before actual data transmission begin. The node which begins transmitting earliest leads to the update of CAIS from the receiving node, so that the node which starts transmitting later is aware of the change of wireless environment before it transmits and a collision is less likely to happen.

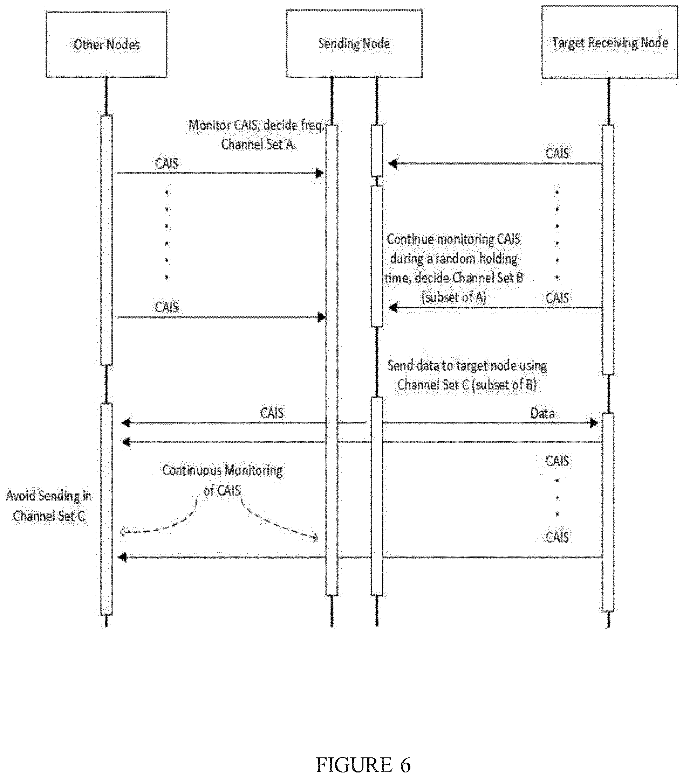

Optionally, the random holding and CAIS update procedure is as follows (as illustrated in the Fig. 6 signaling chart):

a) Node m gets a packet to send to Node n at time t and initially selects the transmitting channel set:

$$A=Am,n(t)$$

b) Node m holds for a period of time $\tau$, and its available channel set for Node n might be changed due to other nodes' transmission and become A=Am,n(t+ $\tau$). The candidate transmitting channels also take into account the earlier selected channel set:

$$B=Am,n(t+\tau)\cap Am,n(t)$$

c) Node m selects a subset of B to start the data transmission immediately: $C \subseteq B$

XI) Transmitting Additional Data with the CAIS (Piggybacking)

Optionally, in addition to the node ID and frequency channel usage data, the CAIS includes (or is packaged with) additional data. Further optionally, the additional data includes control information (such as feedback ACK/NACK, power levels in channels, etc.) piggybacked on the CAIS. This control information may aid in retransmission, distributed scheduling and power control.

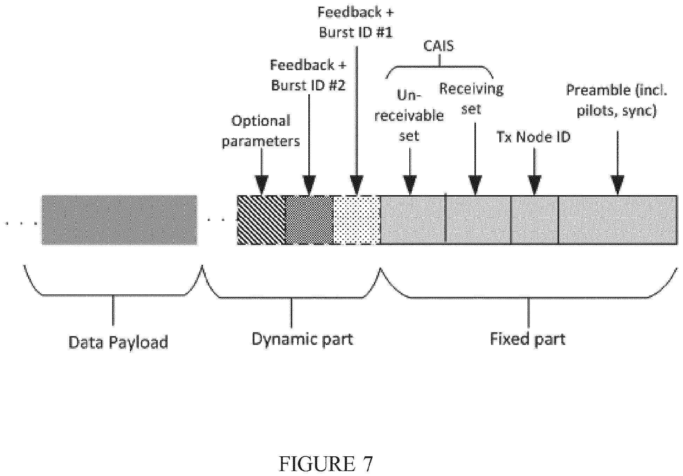

Reference is now made to Fig. 7, which shows an example of dynamic piggybacking of control information on a CAIS. The data includes the Tx node ID and unreceivable and receiving channel sets (labeled "Fixed Part"). The additional data includes:

a) Preamble;
b) Feedback+Burst ID#1;
c) Feedback+Burst ID#2;
d) Optional parameters (may aid in better resource coordination among the nodes, resulting in better overall system performance); and
e) Data payload.

The dynamically piggybacked control information (labeled "Dynamic part") varies dynamically, both across nodes and across time. The dynamic part may contain feedback information (e.g. ACK/NACK) from earlier transmissions as well as other control information to aid system performance. Hence, the dynamic part, just like the fixed part, incorporates the latest information from multiple entities in the baseband unit.

In an exemplary embodiment, the Feedback information is a tuple (e.g. ACK/NACK, Burst ID) to uniquely identify a previous transmission. The Burst ID is a 3-tuple (e.g. transmitting node ID, receiving node ID, Transmission ID), where the node IDs are unique to each node and the Transmission ID is unique to each pair of transmitting node ID and receiving node ID. The optional parameters may include one or more of: transmit power levels in the transmitting channels, average interference levels in the receiving and available channels, further node capabilities such as degree of FD-SIC cancellation support etc.

XII) Dynamic Updating of the CAIS

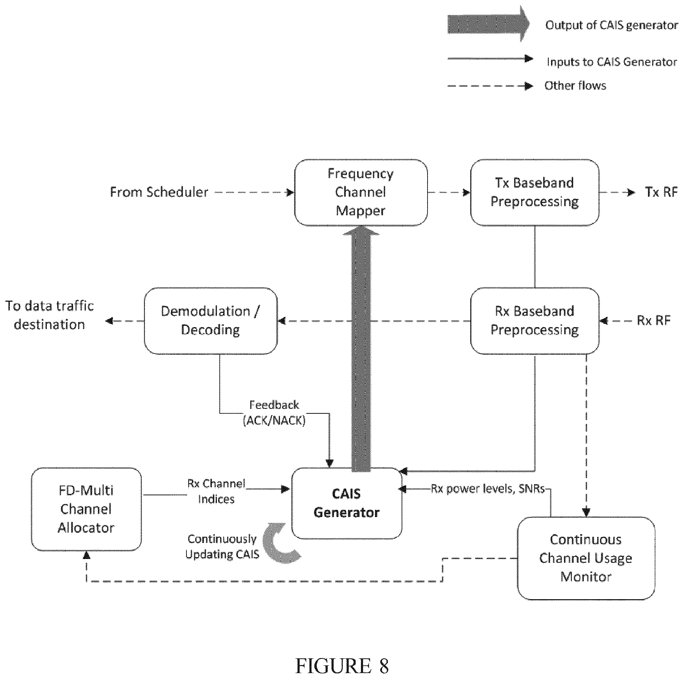

Reference is now made to Fig. 8, which is a simplified block diagram illustrating dynamic updating of the CAIS, according to an exemplary embodiment of the invention. CAIS generator 430 continuously updates both the fixed part of the CAIS and the dynamic part of the CAIS (if present) based on inputs from the Continuous Spectrum Monitor, Multi-Channel Allocator, Demodulation/Decoding unit and the Tx Baseband processing unit, and provides the output CAIS to the Frequency Channel Mapper. Thus, each node always transmits an updated CAIS taking into account the Full-Duplex capability of the apparatus.

XIII) Simulation Results

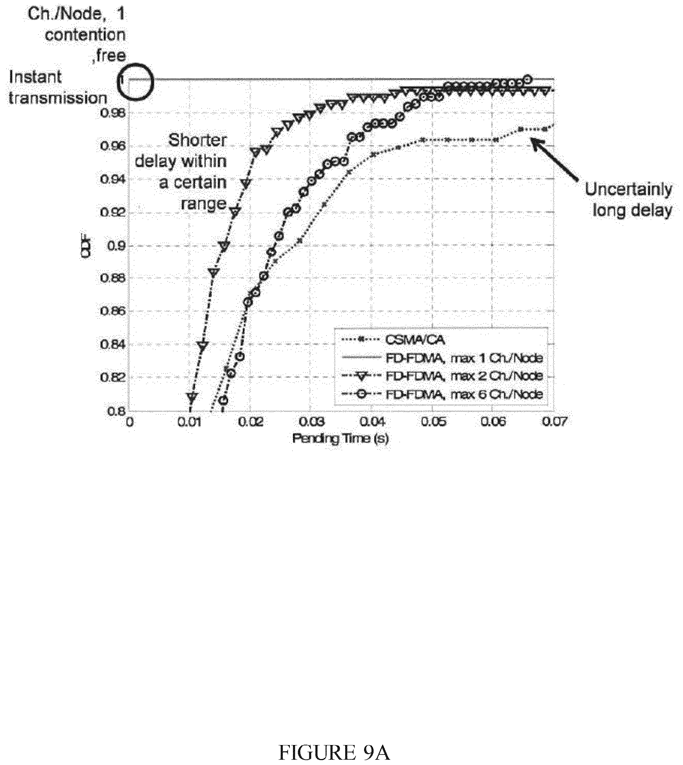

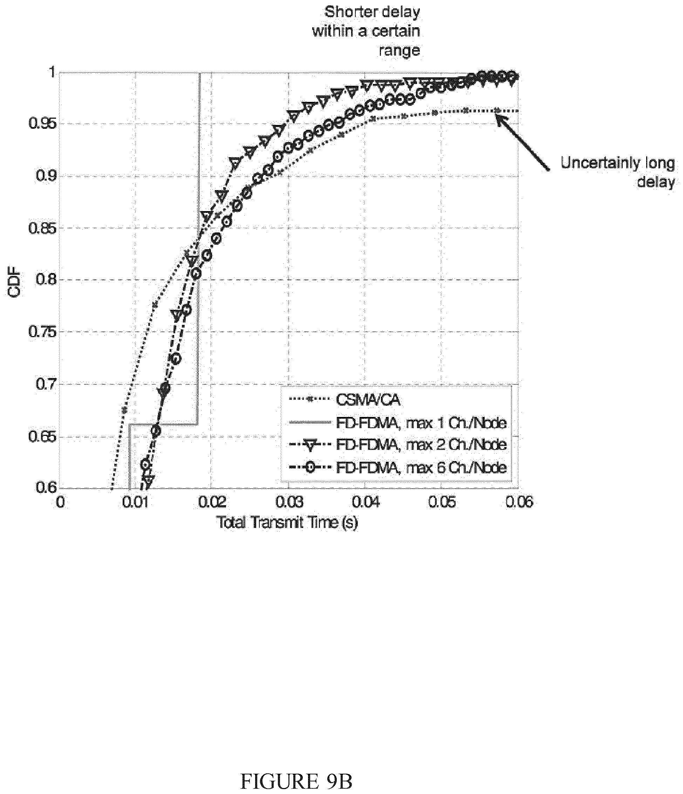

Figs. 9A and 9B present simulation results for exemplary embodiments of the invention. The simulation parameters are listed in Table 2.

Table 2

| Parameters | Values | |
|---|---|---|
| Nodes | 12 nodes, uniformly distributed within an area of 8x8 km$^2$ | |
| Path loss | Free space | |
| Carrier Frequency | 2.4 GHz | |
| Bandwidth | 20 MHz | |
| Maximum Tx Power | 20 dBm | |
| Noise Figure | 6 dB | |
| Number of Frequency Channels | 12 | |
| RF SI Cancelation | 60 dB | sufficient for full duplex + FDMA in different channels |
| Baseband OOB Suppression | 60 dB | |
| MCS | 802.1 In | |
| Packet Length | 10000 bits | |

Fig. 9A presents the CDF of pending time for sending a frame. Fig. 9A shows that the proposed full-duplex frequency dividing multiple access (FD-FDMA) scheme statistically has a much smaller pending time than the conventional CSMA/CA scheme.

Fig. 9B presents the CDF of the total transmission time for sending a frame of data. When the number of frequency channels is equal to or larger than the number of nodes, the pending time before sending out the data becomes zero and the total transmission time is only decided by the length of data burst. Additionally the pending time and total transmission time for CSMA/CA exhibits the heavy-tail distribution due to frequent contention and collision that it could lead to uncertainly long delay, while the delay of the proposed scheme converges within a deterministic value.

Embodiments presented herein are practically implementable with low-cost full duplex radio solution. For example using only analog RF SIC (e.g. 50dB self-interference cancelation) together with simple out-of-channel interference leakage suppression in baseband processing (e.g. FBMC and filtered OFDM which may easily achieve >60dB leakage suppression) a total interference suppression of over 110dB may be achieved. This level of suppression is sufficient for implementing full-duplex wireless communication in multiple frequency channels using a single transceiver as described herein.

Channel allocation using a CAIS, as described herein, may significantly reduce delay and enhance reliability in ad hoc D2D networks. There is no need for the time-consuming and unreliable RTS/CTS handshake. Continuous monitoring of CAIS signals using a full-duplex transceiver minimizes collisions due to hidden/exposed node problems. CAIS usage for channel allocation may be applied in the evolving standards (e.g. future releases of LTE, 5G, WLAN, etc.) which are focusing more and more on reliable and low-latency D2D connectivity for humans and machines (e.g. vehicle, robot, drone, etc.).

The methods as described above are used in the fabrication of integrated circuit chips.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the appended claims. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant WANETs, nodes, full-duplex protocols, SIC techniques, transmitter/receivers and transceivers, channel allocation techniques, coding and modulation techniques, decoding and demodulation techniques, channel mappings, baseband preprocessing, ADCs and DACs will be developed and the scope of the terms WANET, node, full-duplex, channel allocation, SIC, transmitter/receiver, transceiver, coding, modulation, decoding, demodulation, channel mapping, baseband preprocessing, ADC and DAC are intended to include all such new technologies a priori.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

**Claims**

1. A network node for communicating over a wireless ad hoc network, WANET, said WANET comprising a plurality of network nodes communicating on multiple frequency channels, said node (300) comprising:
   at least one processor (320) adapted to execute code instructions for:

   extracting (340) at least one channel allocation information set, CAIS, from signals received from at least one of said WANET nodes, wherein each CAIS comprises a node identifier and frequency channel usage data for a respective node;
   analyzing (350) said at least one extracted CAIS to identify at least one channel, of said multiple frequency channels, receivable by a target node;
   allocating (360) at least one of said identified channels for transmission to said target node; and
   preparing (370) a signal for transmission to said target node over said at least one allocated channel, said signal comprising a CAIS of said network node.

2. A network node according to claim 1, further comprising a transmitter-receiver (330) adapted to transmit and receive signals in said multiple frequency channels in full duplex mode.

3. A network node according to claim 1 or claim 2, wherein said signal for transmission to said target node further comprises a data payload.

4. A network node according to any one of claims 1-3, further adapted to select a random time period for holding transmitting said signal to said target node so as to avoid collision with another node simultaneously initiating transmission on an allocated channel.

5. A network node according to any one of claims 1-4, further adapted to dynamically update said CAIS of said network node (300) according to current frequency channel usage by said network node (300) and current received channel allocation information sets, CAISs, from other WANET nodes.

6. A network node according to any one of claims 1-5, wherein said CAIS further comprises communication control information.

7. A network node according to any one of claims 1-6, wherein said CAIS is transmitted asynchronously from at least one of data transmitted in other frequency channels and CAISs transmitted in other frequency channels.

8. A network node according to any one of claims 1-7, wherein, for at least one of said channels, CAIS transmission and at least one of data reception and data transmission are performed concurrently over said at least one allocated channel.

9. A method for communication in a wireless ad hoc network, WANET, said WANET comprising a plurality of network nodes, said method comprising:
at a network node (300) with full-duplex communication over multiple frequency channels:

transmitting, over at least one of said channels, a dynamically-updated channel allocation information set, CAIS, comprising said node's node identifier and frequency channel usage data for said node (300), said frequency channel usage data specifying channels over which said network node (300) is currently receiving and channels currently unreceivable by said network node (300);
extracting (340) at least one CAIS from signals received from at least one node of said WANET, wherein each CAIS comprises a node identifier and frequency channel usage data for a respective node;
analyzing (350) at least one extracted CAIS to identify at least one channel, of said multiple frequency channels, receivable by a first target node; and
transmitting to said first target node over at least one of said channels receivable by said first target node.

10. A method according to claim 9, wherein said analyzing is performed continuously on signals received concurrently with said transmitting.

11. A method according to claim 9 or claim 10, wherein said identifying comprises:

determining from said at least received CAIS, channels currently unused for data reception by said WANET nodes; and
determining from a respective CAIS of said first target node, at least one channel currently available for reception by said first target node; and
determining available channels for transmission to said first target node from the intersection of said channels currently unused for data reception by said other WANET nodes and said at least one channel currently available for reception by said target node.

12. A method according to any one of claims 9-11, further comprising transmitting to a second target node over a channel currently unused for data reception by said WANET nodes and unreceivable by said first target node.

13. A method according to any one of claims 9-12, wherein said transmitting and receiving is performed by a single transmitter-receiver (330) at said network node (300).

14. A method according to any one of claims 9-13, further comprising including communication control information in said transmitted CAIS.

**Patentansprüche**

1. Netzwerkknoten zum Kommunizieren über ein drahtloses Ad-hoc-Netzwerk, WANET, wobei das WANET eine Vielzahl von Netzwerkknoten umfasst, die auf mehreren Frequenzkanälen kommunizieren, wobei der Knoten (300) Folgendes umfasst:
mindestens einen Prozessor (320), der angepasst ist, Codeanweisungen für Folgendes auszuführen:

   Extrahieren (340) von mindestens einem Kanalzuordnungsinformationssatz, CAIS, aus Signalen, die von mindestens einem der WANET-Knoten empfangen werden, wobei jeder CAIS eine Knotenkennung und Frequenzkanalnutzungsdaten für einen jeweiligen Knoten umfasst;
   Analysieren (350) des mindestens einen extrahierten CAIS, um mindestens einen Kanal der mehreren Frequenzkanäle, der von einem Zielknoten empfangbar ist, zu identifizieren;
   Zuordnen (360) von mindestens einem der identifizierten Kanäle zur Übertragung zum Zielknoten und
   Vorbereiten (370) eines Signals zur Übertragung zum Zielknoten über den mindestens einen zugeordneten Kanal, wobei das Signal einen CAIS des Netzwerkknotens umfasst.

2. Netzwerkknoten nach Anspruch 1, der ferner einen Sendeempfänger (330) umfasst, der angepasst ist, Signale in den mehreren Frequenzkanälen im Vollduplexmodus zu übertragen und zu empfangen.

3. Netzwerkknoten nach Anspruch 1 oder Anspruch 2, wobei das Signal zur Übertragung zum Zielknoten ferner eine Datennutzlast umfasst.

4. Netzwerkknoten nach einem der Ansprüche 1-3, der ferner angepasst ist, eine willkürliche Zeitperiode zum Halten des Übertragens des Signals zum Zielknoten auszuwählen, um eine Kollision mit einem anderen Knoten zu vermeiden, der gleichzeitig eine Übertragung auf einem zugeordneten Kanal initiiert.

5. Netzwerkknoten nach einem der Ansprüche 1-4, der ferner angepasst ist, den CAIS des Netzwerkknotens (300) gemäß einer aktuellen Frequenzkanalnutzung durch den Netzwerkknoten (300) und aktuellen empfangenen Kanalzuordnungsinformationssätzen, CAISs, von anderen WANET-Knoten dynamisch zu aktualisieren.

6. Netzwerkknoten nach einem der Ansprüche 1-5, wobei der CAIS ferner Kommunikationssteuerinformationen umfasst.

7. Netzwerkknoten nach einem der Ansprüche 1-6, wobei der CAIS von mindestens einem von Daten, die in anderen Frequenzkanälen übertragen werden, und CAISs, die in anderen Frequenzkanälen übertragen werden, asynchron übertragen wird.

8. Netzwerkknoten nach einem der Ansprüche 1-7, wobei für mindestens einen der Kanäle die CAIS-Übertragung und mindestens eines von einem Datenempfang und einer Datenübertragung zeitgleich über den mindestens einen zugeordneten Kanal durchgeführt werden.

9. Verfahren zur Kommunikation in einem drahtlosen Ad-hoc-Netzwerk, WANET, wobei das WANET eine Vielzahl von Netzwerkknoten umfasst, wobei das Verfahren Folgendes umfasst:
an einem Netzwerkknoten (300) mit Vollduplexkommunikation über mehrere Frequenzkanäle:

   Übertragen von einem dynamisch aktualisierten Kanalzuordnungsinformationssatz, CAIS, der die Knotenkennung des Knotens und Frequenzkanalnutzungsdaten für den Knoten (300) umfasst, über mindestens einen der Kanäle, wobei die Frequenzkanalnutzungsdaten Kanäle, über die der Netzwerkknoten (300) derzeit empfängt, und Kanäle, die vom Netzwerkknoten (300) derzeit nicht empfangbar sind, spezifizieren;
   Extrahieren (340) von mindestens einem CAIS aus Signalen, die von mindestens einem Knoten des WANET empfangen werden, wobei jeder CAIS eine Knotenkennung und Frequenzkanalnutzungsdaten für einen jeweiligen Knoten umfasst;
   Analysieren (350) mindestens eines extrahierten CAIS, um mindestens einen Kanal der mehreren Frequenzkanäle, der von einem ersten Zielknoten empfangbar ist, zu identifizieren; und
   Übertragen zum ersten Zielknoten über mindestens einen der Kanäle, die vom ersten Zielknoten empfangbar sind.

10. Verfahren nach Anspruch 9, wobei das Analysieren kontinuierlich an Signalen durchgeführt wird, die zeitgleich mit dem Übertragen empfangen werden.

**11.** Verfahren nach Anspruch 9 oder Anspruch 10, wobei das Identifizieren Folgendes umfasst:

Bestimmen von Kanälen, die von den WANET-Knoten derzeit nicht zum Datenempfang verwendet werden, anhand des mindestens einen empfangenen CAIS und

Bestimmen von mindestens einem Kanal, der derzeit für den Empfang durch den ersten Zielknoten verfügbar ist, anhand eines jeweiligen CAIS des ersten Zielknotens und

Bestimmen von verfügbaren Kanälen für die Übertragung zum ersten Zielknoten anhand der Überschneidung der Kanäle, die derzeit von den anderen WANET-Knoten nicht zum Datenempfang verwendet werden, und des mindestens einen Kanals, der derzeit für den Empfang durch den Zielknoten verfügbar ist.

**12.** Verfahren nach einem der Ansprüche 9-11, das ferner das Übertragen zu einem zweiten Zielknoten über einen Kanal, der derzeit von den WANET-Knoten nicht für den Datenempfang verwendet wird und vom ersten Zielknoten nicht empfangbar ist, umfasst.

**13.** Verfahren nach einem der Ansprüche 9-12, wobei das Übertragen und Empfangen von einem einzelnen Sendeempfänger (330) am Netzwerkknoten (300) durchgeführt wird.

**14.** Verfahren nach einem der Ansprüche 9-13, das ferner das Beinhalten von Kommunikationssteuerinformationen im übertragenen CAIS umfasst.

**Revendications**

**1.** Nœud de réseau pour communiquer sur un réseau ad hoc sans fil (WANET), ledit WANET comprenant une pluralité de nœuds de réseau communiquant sur de multiples canaux de fréquence, ledit nœud (300) comprenant :
au moins un processeur (320) conçu pour exécuter des instructions de code pour :

extraire (340) au moins un ensemble d'informations d'affectation de canal (CAIS) de signaux reçus en provenance d'au moins un desdits nœuds WANET, chaque CAIS comprenant un identifiant de nœud et des données d'utilisation de canal de fréquence pour un nœud respectif ;

analyser (350) ledit au moins un CAIS extrait pour identifier au moins un canal, desdits multiples canaux de fréquence, recevable par un nœud cible ;

affecter (360) au moins un desdits canaux identifiés en vue d'une émission vers ledit nœud cible ; et

préparer (370) un signal destiné à être émis vers ledit nœud cible sur ledit au moins un canal affecté, ledit signal comprenant un CAIS dudit nœud de réseau.

**2.** Nœud de réseau selon la revendication 1, comprenant en outre un émetteur-récepteur (330) conçu pour émettre et recevoir des signaux dans lesdits multiples canaux de fréquence en mode duplex intégral.

**3.** Nœud de réseau selon la revendication 1 ou 2, dans lequel ledit signal destiné à être émis vers ledit nœud cible comprend en outre une charge utile de données.

**4.** Nœud de réseau selon l'une quelconque des revendications 1 à 3, conçu en outre pour sélectionner une période de temps aléatoire pour retenir l'émission dudit signal vers ledit nœud cible afin d'éviter une collision avec un autre nœud amorçant simultanément une émission sur un canal affecté.

**5.** Nœud de réseau selon l'une quelconque des revendications 1 à 4, conçu en outre pour mettre à jour dynamiquement ledit CAIS dudit nœud de réseau (300) selon une utilisation courante de canal de fréquence par ledit nœud de réseau (300) et des ensembles d'informations d'affectation de canal (CAIS) courants reçus en provenance d'autres nœuds WANET.

**6.** Nœud de réseau selon l'une quelconque des revendications 1 à 5, dans lequel ledit CAIS comprend en outre une information de contrôle de communication.

**7.** Nœud de réseau selon l'une quelconque des revendications 1 à 6, dans lequel ledit CAIS est émis de façon asynchrone à partir de données émises dans d'autres canaux de fréquence et/ou à partir de CAIS émis dans d'autres canaux de fréquence.

8. Nœud de réseau selon l'une quelconque des revendications 1 à 7, dans lequel, pour au moins un desdits canaux, l'émission de CAIS et la réception de données et/ou l'émission de données sont réalisées simultanément sur ledit au moins un canal affecté.

9. Procédé de communication dans un réseau ad hoc sans fil (WANET), ledit WANET comprenant une pluralité de nœuds de réseau, ledit procédé consistant, au niveau d'un nœud de réseau (300) avec une communication en duplex intégral sur de multiples canaux de fréquence, à :

émettre, sur au moins un desdits canaux, un ensemble d'informations d'affectation de canal (CAIS) mis àjour dynamiquement, comprenant l'identifiant de nœud dudit nœud et des données d'utilisation de canal de fréquence pour ledit nœud (300), lesdites données d'utilisation de canal de fréquence spécifiant des canaux sur lesquels ledit nœud de réseau (300) est actuellement en train de recevoir et des canaux actuellement non recevables par ledit nœud de réseau (300) ;
extraire (340) au moins un CAIS de signaux reçus en provenance d'au moins un nœud dudit WANET, chaque CAIS comprenant un identifiant de nœud et des données d'utilisation de canal de fréquence pour un nœud respectif ;
analyser (350) au moins un CAIS extrait pour identifier au moins un canal, desdits multiples canaux de fréquence, recevables par un premier nœud cible ; et
émettre vers ledit premier nœud cible sur au moins un desdits canaux recevables par ledit premier nœud cible.

10. Procédé selon la revendication 9, dans lequel ladite analyse est réalisée en continu sur des signaux reçus simultanément à ladite émission.

11. Procédé selon la revendication 9 ou 10, dans lequel ladite identification consiste à :

déterminer, à partir dudit au moins un CAIS reçu, des canaux actuellement non utilisés en vue d'une réception de données par lesdits nœuds WANET ; et
déterminer, à partir d'un CAIS respectif dudit premier nœud cible, au moins un canal actuellement disponible en vue d'une réception par ledit premier nœud cible ; et
déterminer des canaux disponibles en vue d'une émission vers ledit premier nœud cible à partir de l'intersection desdits canaux actuellement non utilisés en vue d'une réception de données par lesdits autres nœuds WANET et dudit au moins un canal actuellement disponible en vue d'une réception par ledit nœud cible.

12. Procédé selon l'une quelconque des revendications 9 à 11, consistant en outre à émettre vers un second nœud cible sur un canal actuellement non utilisé en vue d'une réception de données par lesdits nœuds WANET et non recevable par ledit premier nœud cible.

13. Procédé selon l'une quelconque des revendications 9 à 12, dans lequel ladite émission et ladite réception sont réalisées par un unique émetteur-récepteur (330) au niveau dudit nœud de réseau (300).

14. Procédé selon l'une quelconque des revendications 9 à 13, consistant en outre à inclure une information de contrôle de communication dans ledit CAIS émis.

FIGURE 1

FIGURE 2

300

Network node

330

Transmitter/
Receiver

WANET

310

Code
instructions

320

Processor

FIGURE 3A

Start

Extract CAIS from
received signals —— 340

Analyze CAIS —— 350

Allocate channel(s) for—— 360
transmission to target
node

Prepare signal for —— 370
transmission

End

FIGURE 3B

400

Allocation manager

420

Data traffic information → Multi-channel allocator

430

CAIS generator → CAIS

Channel allocations

410

Continuous Channel Usage Monitor ← Received baseband signals

FIGURE 4A

FIGURE 4B

```
                                                                                          Antenna
                                                                                            ▽

┌──────────┐   ┌──────────┐   ┌──────────┐   ┌──────────┐   ┌──────────┐   ┌──────────┐   ┌──────────┐
│Data Traffic│→│ Coding / │→│  Random  │→│Frequency │→│Tx Baseband│→│   DAC    │→│  Tx RF   │
│  Source   │   │Modulation│   │Holding Time│  │ Channel  │   │Preprocessing│ │          │   │          │
│          │   │          │   │          │   │  Mapper  │   │          │   │          │   │          │
└──────────┘   └──────────┘   └──────────┘   └──────────┘   └──────────┘   └──────────┘   └──────────┘
                                                              Baseband SIC                RF SIC   Antenna
                                                                                                    SIC
┌──────────┐                                  ┌──────────┐   ┌──────────┐   ┌──────────┐   ┌──────────┐
│Data Traffic│                                │Demodulation/│ │Rx Baseband│←(-)│  ADC    │←│  Rx RF   │←(-)←(  )
│Destination │                                │ Decoding │   │Preprocessing│               │          │
└──────────┘                                  └──────────┘   └──────────┘   └──────────┘   └──────────┘

                              ┌──────────┐   ┌──────────┐
                              │  CAIS    │   │Continuous │
                              │Generator │   │Channel Usage│
                              │          │   │ Monitor  │
                              └──────────┘   └──────────┘

                    ┌──────────┐
                    │Full Duplex│                                            ──── 400
                    │Multi-Channel│
                    │ Allocator │
                    └──────────┘

┌──────────┐
│Central Controlling│
│   Node   │
│(e.g. Base Station)│
└──────────┘
```

FIGURE 4C

EP 3 406 107 B1

Replacement sheet

Transmit:

Receive:  ⋯

Preamble
Node ID
CAIS
Receiving Ch.:
k+1, k+3, k+4
Unreceivable
Ch.: k, k+2

Preamble
Node ID
CAIS
Receiving Ch.:
k+4, k+5, k+6
Unreceivable
Ch.: k+2, k+7

Time

Frequency

Ch. k   Ch. k+1   Ch. k+2   Ch. k+3   Ch. k+4   Ch. k+5   Ch. k+6   Ch. k+7

**Legend:**

- Transmitted CAIS Frame
- Received CAIS Frame from Other Nodes
- Received Data Interested by This Node
- Received Signal Not Interested by This Node
- Transmitted ACK/NACK
- Transmitted Data

FIGURE 5

FIGURE 6

FIGURE 7

FIGURE 8

FIGURE 9A

FIGURE 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015327315 A

**Non-patent literature cited in the description**

- **A. SAHAI ; G. PATEL ; A. SABHARWAL.** Pushing the Limits of Full Duplex: Design and Real-Time Implementation. *Rice University Technical Report TREE 1104,* 2011
- **S. GOVAL et al.** A Distributed MAC Protocol for Full Duplex Radio. *Proc. ASILOMAR,* 2013
- **M. JAIN et al.** Practical, Real-Time, Full Duplex Wireless. *Proc. ACM MobiCom,* 2011
- **W. ZHOU ; K. SRINIVASAN ; P. SINHA.** RCTC: Rapid Concurrent Transmission Coordination in Full Duplex Wireless Networks. *IEEE Int'1. Conf. Network Protocols,* 2013
- **K. TAMAKI et al.** Full Duplex Media Access Control for wireless Multi-Hop Networks. *Proc. IEEE VTC Spring,* 2013
- **Y. ZHANG et al.** FD-MMAC: Combating Multi-Channel Hidden and Exposed Terminals Using a Single Transceiver. *Proc. IEEE INFOCOM,* 2014